# EUROPEAN PATENT APPLICATION

(11) **EP 4 826 847 A1**
(43) Date of publication of application: **21.10.2026**
(21) Application number: 26170027.2
(22) Date of filing: 31.03.2026
(51) Int. Cl.: H01M 10/613, H01M 10/643, H01M 10/6567, H01M 50/383

(54) **COOLING DEVICE**

(30) Priority: 18.04.2025 TW 114114744
(71) Applicant: Delta Electronics, Inc., Taoyuan City 33341 (TW)
(72) Inventor: LIN, Mu-Min, 320023 Taoyuan City (TW); PENG, Yen-Kai, 320023 Taoyuan City (TW)
(74) Representative: 2K Patent Partnerschaft mbB

(57) **Abstract**

A cooling device for cooling a cell is provided, which includes a first stack plate, a second stack plate, a cooling fluid, and a fusible material. The first stack plate is attached to the cell and has a first bonding portion and a first accommodating portion. The first bonding portion surrounds the first accommodating portion. The second stack plate is disposed on the first stack plate and has a second bonding portion and a second accommodating portion. The second bonding portion surrounds the second accommodating portion. The second bonding portion and the first bonding portion are bonded together and collectively form a sealed opening. The first accommodating portion and the second accommodating portion collectively form an accommodating space, and the accommodating space is in fluid communication with the sealed opening. The cooling fluid is disposed in the accommodating space. The fusible material is filled into the sealed opening.

## Description

### CROSS REFERENCE TO RELATED APPLICATIONS

This Application claims priority of Taiwan Patent Application No. 114114744, filed on April 18, 2025, the entirety of which is incorporated by reference herein.

### BACKGROUND OF THE INVENTION

### Field of the Invention

The present disclosure relates to a cooling device, and, in particular, it relates to a cooling device capable of releasing cooling fluid at high temperatures to prevent thermal runaway of a battery cell.

### Description of the Related Art

An increasing number of devices and equipment today are equipped with battery modules. A battery module generally includes a plurality of battery cells connected in series or in parallel. They are used as a power source for a device or a piece of equipment. Battery modules often generate a significant amount of heat during operation, however, and this can lead to thermal runaway of the battery cells and pose a risk of fire. Therefore, while existing battery modules have gradually met their intended purposes, they do not meet requirements in all respects. There is still a need to develop a cooling device capable of preventing thermal runaway of battery cells.

### BRIEF SUMMARY OF THE INVENTION

According to some embodiments, a cooling device for cooling a cell is provided, which includes a first stack plate, a second stack plate, a cooling fluid, and a fusible material. The first stack plate is attached to the cell, wherein the first stack plate including a first bonding portion and a first accommodating portion, and the first bonding portion surrounds the first accommodating portion. The second stack plate is disposed on the first stack plate, wherein the second stack plate including a second bonding portion and a second accommodating portion, and the second bonding portion surrounds the second accommodating portion. The second bonding portion and the first bonding portion are joined to form a sealed opening. The first accommodating portion and the second accommodating portion cooperate to define an accommodating space in fluid communication with the sealed opening. The cooling fluid contained within the accommodating space. The fusible material disposed within the sealed opening.

The cooling device of the present disclosure may be applied in a variety of battery modules. In order to make the features and advantages of the present disclosure more comprehensible, various embodiments are specially cited hereinafter, together with the accompanying drawings, to be described in detail as follows.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 is an exploded schematic diagram illustrating the cooling device according to some embodiments of the present disclosure.
FIG. 2 is a perspective schematic diagram illustrating the cooling device according to some embodiments of the present disclosure.
FIG. 3 is a schematic top view illustrating the cooling device according to some embodiments of the present disclosure.
FIG. 4 is a schematic side view illustrating the sealed opening according to some embodiments of the present disclosure.
FIG. 5 is a schematic side view illustrating the cooling device and the battery cell according to some embodiments of the present disclosure.
FIG. 6 is a perspective schematic diagram illustrating the cooling device and the battery cell according to some embodiments of the present disclosure.
FIG. 7 is a perspective schematic diagram illustrating the cooling device according to some embodiments of the present disclosure.
FIG. 8 is a perspective schematic diagram illustrating the cooling device and the battery cell according to some embodiments of the present disclosure.
FIG. 9 is a perspective schematic diagram illustrating the cooling device and the battery cell according to some embodiments of the present disclosure.
FIG. 10 is a schematic cross-sectional view illustrating the flow-guiding structure according to some embodiments of the present disclosure.
FIG. 11 is a perspective schematic diagram illustrating the plurality of cooling devices and the plurality of battery cells according to some embodiments of the present disclosure.
FIG. 12 is a perspective schematic diagram illustrating the cooling device according to some embodiments of the present disclosure.
FIG. 13 is a schematic top view illustrating the cooling device and the battery cell according to some embodiments of the present disclosure.

### DETAILED DESCRIPTION OF THE INVENTION

The devices of various embodiments of the present disclosure will be described in detail below. It should be understood that the following description provides many different embodiments for implementing various aspects of some embodiments of the present disclosure. The specific elements and arrangements described below are merely to clearly describe some embodiments of the present disclosure. Of course, these are only used as examples rather than limitations of the present disclosure. Furthermore, similar or corresponding reference numerals may be used in different embodiments to designate similar or corresponding elements in order to clearly describe the present disclosure. However, the use of these similar or corresponding reference numerals is only for the purpose of simply and clearly description of some embodiments of the present disclosure, and does not imply any correlation between the different embodiments or examples discussed.

In some embodiments of the present disclosure, terms about disposing and connecting, such as "disposing", "connecting" and similar terms, unless otherwise specified, may refer to two features are in direct contact with each other, or may also refer to two features are not in direct contact with each other, wherein there is an additional connect feature between the two features. The terms about disposing and connecting may also include the case where both features are movable, or both features are fixed.

In addition, ordinal numbers such as "first", "second", and the like used in the specification and claims are configured to modify different features or to distinguish different embodiments or ranges, rather than to limit the number, the upper or lower limits of features, and are not intended to limit the order of manufacture or arrangement of features.

Herein, the terms "approximately", "about", and "substantially" generally mean within 10%, within 5%, within 3%, within 2%, within 1%, or within 0.5% of a given value or range. The given value is an approximate value, that is, "approximately", "about", and "substantially" may still be implied without the specific description of "approximately", "about", and "substantially". The phrase "a range between a first value and a second value" means that the range includes the first value, the second value, and other values in between. Furthermore, any two values or directions used for comparison may have certain tolerance. If the first value is equal to the second value, it implies that there may be a tolerance within about 10%, within 5%, within 3%, within 2%, within 1%, or within 0.5% between the first value and the second value. If the first direction is perpendicular to the second direction, the angle between the first direction and the second direction may be between 80 degrees and 100 degrees. If the first direction is parallel to the second direction, the angle between the first direction and the second direction may be between 0 degrees and 10 degrees.

Unless otherwise defined, all terms (including technical and scientific terms) used herein have the same meaning as commonly understood by a person of ordinary skill in the art. It is understood that these terms, such as those defined in commonly used dictionaries, should be interpreted as having meanings consistent with the relevant art and the background or context of the present disclosure, and should not be interpreted in an idealized or overly formal manner, unless otherwise defined in the embodiments of the present disclosure.

It should be understood that, for the sake of clarity, certain components of the device are omitted from the drawings, and only selected components are illustrated schematically. In some embodiments, additional components may be added to the device described below. In other embodiments, certain components of the device may be replaced or omitted. It should also be understood that, in some embodiments, additional process steps may be provided before, during, and/or after the manufacturing method of the device. Some of the described process steps may be substituted or omitted, and the sequence of some steps may be interchangeable.

In existing battery modules, a plurality of battery cells are typically arranged in close proximity. When one or more of these battery cells experience thermal runaway due to high operating temperatures or damage such as puncture, flames may erupt and spread to adjacent battery cells. As a result, the entire battery module may become completely damaged within a short period of time. To address this issue, the present disclosure provides a cooling device that may effectively transfer heat from the battery cells to the outside under normal conditions. Furthermore, when the temperature of one or more of the battery cells rises to a critical threshold, the cooling device of the present disclosure allows a cooling fluid to overflow from a water bag to rapidly reduce the temperature of the affected battery cell, thereby effectively protecting the entire battery module. Compared with the prior art, the cooling device 1 of the present disclosure prevents thermal runaway of the battery cells, rather than merely preventing the spread of flames after thermal runaway has occurred.

In some embodiments, the battery module may include a lithium-ion battery (Li-ion), a lithium polymer battery (Li-polymer), a nickel-metal hydride battery (NiMH), a lithium iron phosphate battery (LiFePO₄), a solid-state battery, other suitable types of batteries, or a combination thereof. However, the present disclosure is not limited thereto. In some embodiments, the battery cells in the battery module may have a substantially rectangular parallelepiped shape. However, the present disclosure is not limited thereto. In some embodiments, the battery cells in the battery module may also have a substantially cylindrical shape. In such cases, a plurality of battery cells may be arranged in a hexagonal close-packed configuration for tight stacking. Accordingly, the cooling device of the present disclosure may be adapted in its detailed structure to more effectively conform to and attach to such battery cells. A detailed description is provided below.

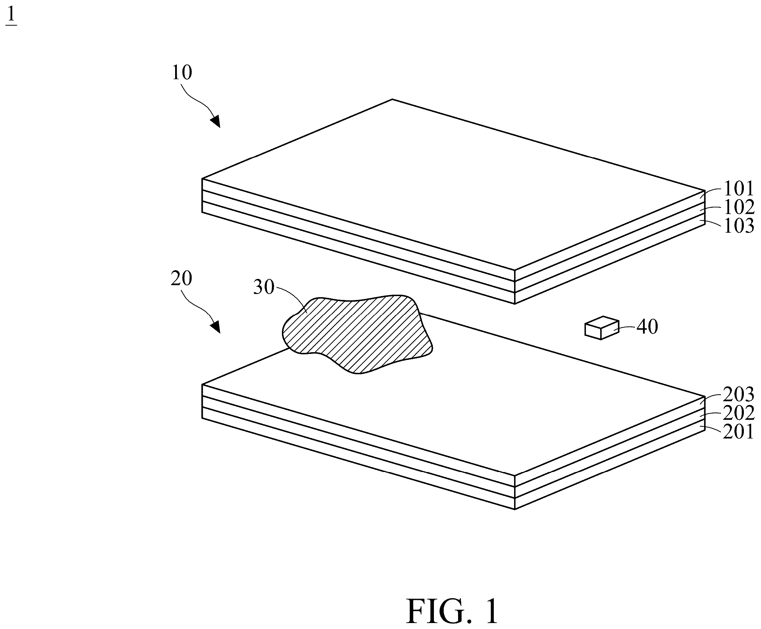

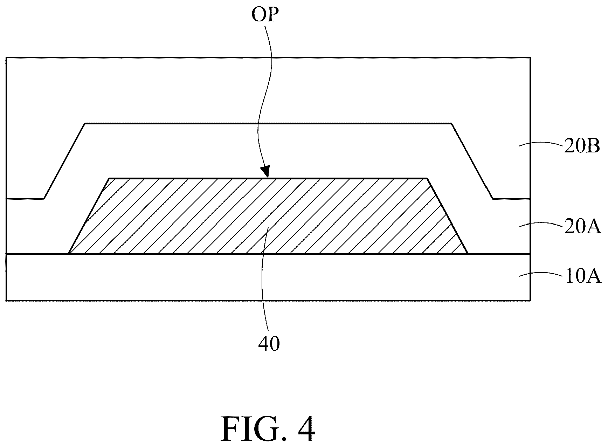

FIGS. 1 to 3 are respectively an exploded schematic diagram, a perspective schematic diagram, and a top view schematic diagram illustrating the cooling device according to some embodiments of the present disclosure. Additionally, FIG. 4 is a side view schematic diagram illustrating the sealed opening according to some embodiments of the present disclosure. As shown in FIG. 1, the cooling device 1 includes a first stack plate 10, a second stack plate 20, a cooling fluid 30, and a fusible material 40. Specifically, the first stack plate 10 and the second stack plate 20 may be combined to form a cooling bag configured to accommodate the cooling fluid 30, and the fusible material 40 fills the sealed opening of the cooling bag to seal the cooling fluid 30 in the cooling bag. Under normal conditions (i.e., during standard operation), the cooling device 1 may be configured to provide heat insulation and heat absorption for the battery cell, thereby ensuring that the battery cell operates within an appropriate temperature range. In addition, when the temperature of the battery cell becomes excessively high (e.g., exceeds a critical threshold), the fusible material 40 of the cooling device 1 melts, allowing the cooling fluid 30 to flow out of the cooling bag and come into direct contact with the battery cell, thereby rapidly reducing the temperature of the battery cell. To facilitate understanding of the present disclosure, a detailed description of the components and possible configurations is provided below.

As shown in FIG. 1, the first stack plate 10 may have a multilayer structure, and may include, for example, a protective layer 101, a barrier layer 102, and a sealing layer 103. In some embodiments, the protective layer 101 is configured to protect the barrier layer 102 and the sealing layer 103, while also providing enhanced durability and wear resistance. For example, the material of the protective layer 101 may include a polymer material, such as polyethylene terephthalate (PET), polyethylene (PE), nylon, other suitable materials, or a combination thereof, but the present disclosure is not limited thereto. In some embodiments, the barrier layer 102 is configured to prevent moisture, oxygen, and light from entering the cooling bag, thereby preventing the deterioration of the cooling fluid 30. For example, the material of the barrier layer 102 may include a metal material, such as aluminum foil, copper foil, silver foil, other suitable metal foils, or a combination thereof, but the present disclosure is not limited thereto. In some embodiments, the sealing layer 103 is configured to be in direct contact with the cooling fluid 30 and to provide high chemical stability and sealing performance. For example, the sealing layer 103 may be bonded to the sealing layer 203 of the second stack plate 20 by a heat pressing process to form the accommodating space. In some embodiments, the material of the sealing layer 103 may include a polymer material, such as polyethylene (PE), polypropylene (PP), other suitable materials, or a combination thereof, but the present disclosure is not limited thereto.

It should be noted that the first stack plate 10 of the present disclosure is not limited to the number of layers or the materials described above. In other embodiments, the first stack plate 10 may include two, four, five, or more sealing layers. For example, the first stack plate 10 may include: a protective layer configured for waterproofing, moisture resistance, and weather resistance; a first reinforcement layer configured to enhance mechanical strength; a barrier layer configured to block gas and moisture; a second reinforcement layer configured to enhance structural integrity and stability; and a sealing layer configured for direct contact with the cooling fluid 30. In other words, one of ordinary skill in the art will appreciate that the number of layers or the materials used in the first stack plate 10 may be adjusted according to actual requirements to improve the applicability of the product. In some embodiments, the first stack plate 10 may be an aluminum-laminated film (ALF), and the ALF may be a three-layer or five-layer laminated structure.

The second stack plate 20 is disposed on the first stack plate 10. Similar to the first stack plate10, the second stack plate 20 may also have a multi-layer structure, and may include, for example, a protective layer 201, a barrier layer 202, and a sealing layer 203. In some embodiments, the functions and compositions of the protective layer 201, the barrier layer 202, and the sealing layer 203 may be similar or identical to those of the protective layer 101, the barrier layer 102, and the sealing layer 103, respectively, and thus will not be described in detail herein. In other embodiments, the second stack plate 20 may also include two, four, five or more sealing layers. For example, the second stack plate 20 may include the protective layer, the first reinforcement layer, the barrier layer, the second reinforcement layer, and the sealing layer as mentioned above. In some embodiments, the second stack plate 20 may also be an aluminum plastic film (ALF).

It should be noted that the second stack plate 20 and the first stack plate 10 are not necessarily completely symmetrical. That is, the number of layers or the materials of the second stack plate 20 may differ from those of the first stack plate 10. For example, since the first stack plate 10 is in direct contact with the battery cell, the first stack plate10 may have a thermal conductive layer, an adhesive layer, a wear-resistant layer, or other suitable functional layers, so as to enhance thermal conductivity, bonding strength, durability, or other functions between the first stack plate 10 and the battery cell. Alternatively, since the second stack plate 20 is positioned farther from the battery cell than the first stack plate 10, it may further include a heat dissipation layer (e.g., a surface having a porous structure), or other suitable functional layers to enhance the heat dissipation performance of the second stack plate 20 itself. In other words, the specific structures described above are illustrative and are not intended to limit the present disclosure. A person having ordinary skill in the art will appreciate that the specific composition of the first stack plate 10 and/or the second stack plate 20 may be adjusted as needed.

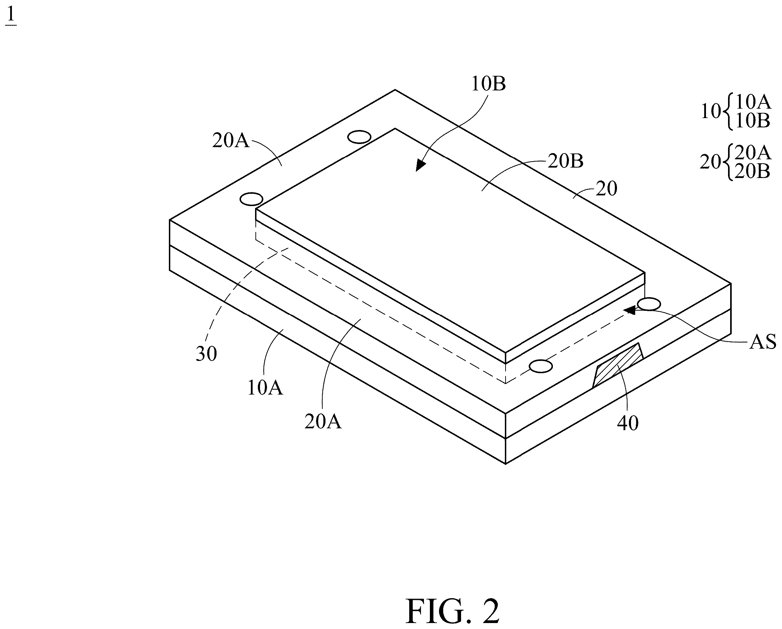

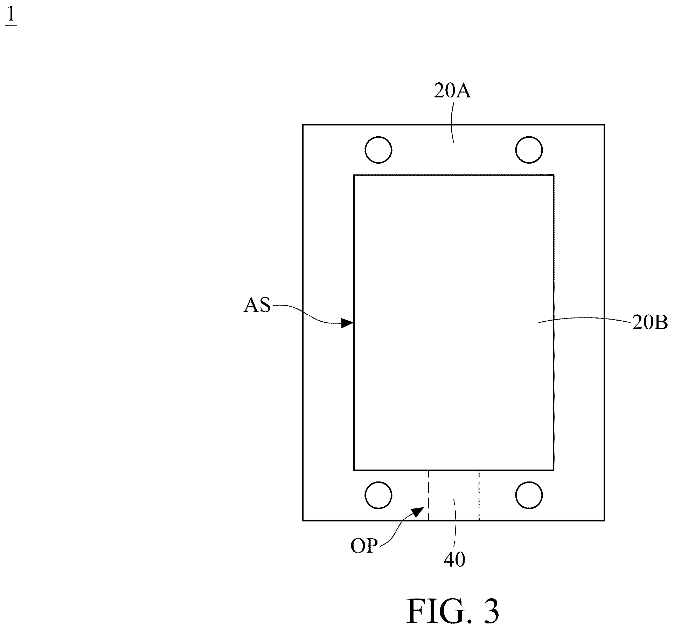

As shown in FIGS. 2 and 3, based on functional differentiation, the first stack plate 10 has a first bonding portion 10A and a first accommodating portion 10B, wherein the first bonding portion 10A surrounds the first accommodating portion 10B. In the present disclosure, the first bonding portion 10A refers to the outer edge portion of the first stack plate 10 and is configured to be connected to the second stack plate 20. The first accommodating portion 10B refers to the central portion of the first stack plate 10 and is configured to cooperate with the second stack plate 20 to form an accommodating space. In some embodiments, the first bonding portion 10A and the first accommodating portion 10B may have similar or identical numbers of layers or materials, such as the sealing layers described above. However, the present disclosure is not limited thereto. In other embodiments, to further enhance the sealing performance of the first accommodating portion 10B, the first accommodating portion 10B may have a different number of layers or materials from those of the first bonding portion 10A.

Similarly, based on functional differentiation, the second stack plate 20 has a second bonding portion 20A and a second accommodating portion 20B, wherein the second bonding portion 20A surrounds the second accommodating portion 20B. Similarly, the second bonding portion 20A refers to the outer edge portion of the second stack plate 20, while the second accommodating portion 20B refers to the central portion of the second stack plate 20. The second bonding portion 20A and the second accommodating portion 20B may have similar or identical numbers of layers or materials. However, the present disclosure is not limited thereto. In some embodiments, the second accommodating portion 20B may have a different number of layers or materials from those of the second bonding portion 20A.

In some embodiments, the second bonding portion 20A and the first bonding portion 10A may be bonded together through a process such as heat pressing, and may jointly define a sealed opening OP. As shown in FIG. 4, in the cross-sectional view, the sealed opening OP may have a shape such as a triangle, rectangle, square, trapezoid, circle, ellipse, other suitable shapes, or a combination thereof. However, the present disclosure is not limited thereto.

On the other hand, in the above process, the first accommodating portion 10B and the second accommodating portion 20B may be spaced apart by a specific distance using a mold of a predetermined shape, thereby forming an accommodating space AS between the two components, wherein the accommodating space AS is in fluid communication with the sealed opening OP. In this manner, a cooling bag for accommodating the cooling fluid 30 may be formed. As shown in FIG. 3, in the top view, the accommodating space AS may have a shape such as a triangle, rectangle, square, trapezoid, circle, ellipse, other suitable shapes, or a combination thereof. However, the present disclosure is not limited thereto.

As shown in FIGS. 2 and 3, the cooling fluid 30 is disposed within the accommodating space AS. In some embodiments, the cooling fluid 30 may have a high thermal enthalpy or high thermal conductivity for absorbing thermal energy or rapidly transferring heat. Furthermore, when the temperature of the battery cell exceeds a critical value (e.g., corresponding to the melting point described below), the cooling fluid 30 may flow out of the accommodating space AS through the sealed opening OP and be in direct contact with the battery cell, thereby rapidly cooling the battery cell. In some embodiments, the cooling fluid 30 may include water-based coolants, fire-resistant coolants, oil-based coolants, organic coolants, Fluorinert, other suitable coolants, or a combination thereof, but the present disclosure is not limited thereto. For example, a water-based coolant may include water, a preservative, an antifreeze agent, and/or an antifoaming agent; a fire-proof coolant may include an organic solvent (such as ethylene glycol or propylene glycol), a fire-retardant additive (e.g., phosphate esters, silicone-based compounds) and/or an inhibitor (such as boric acid or nitrites); an oil-based coolant may include mineral oil, synthetic oil, an antioxidant, a corrosion inhibitor, and/or an antifoaming agent; and a fluorinated liquid may include a fluorine-containing compound. It should be noted that the above materials are merely exemplary. A person having ordinary skill in the art will appreciate that the cooling fluid 30 may be selected based on actual requirements to accommodate different types of battery cells. For example, when the battery cell is relatively large or generates a significant amount of heat, a cooling fluid 30 having higher thermal enthalpy or thermal conductivity may be selected. Conversely, when the battery cell is relatively small or generates less heat, a cooling fluid 30 having lower thermal enthalpy or thermal conductivity may be used.

As shown in FIG. 2 and FIG. 3, the fusible material 40 is filled into the sealed opening OP. In some embodiments, the fusible material 40 is configured to fill the sealed opening OP so as to prevent the cooling fluid 30 from leaking out of the accommodating space AS. Furthermore, when the temperature of the fusible material 40 exceeds a melting point, the fusible material 40 melts, thereby allowing the cooling fluid 30 to flow out of the accommodating space AS through the sealed opening OP. For example, the melting point may be greater than 70°C; however, the present disclosure is not limited thereto. In some embodiments, the material of the fusible material 40 may include low-density polyethylene (LDPE), polypropylene (PP), other suitable materials, or a combination thereof, but the present disclosure is not limited thereto. It should be noted that the above materials are merely exemplary. A person having ordinary skill in the art will appreciate that the fusible material 40 may be selected based on specific requirements to suit different types of battery cells. For example, when the runaway temperature of the battery cell is relatively high, a fusible material 40 having a higher melting point may be selected. Conversely, when the runaway temperature of the battery cell is relatively low, a fusible material 40 having a lower melting point may be selected.

As mentioned above, various components in the cooling device 1 have been roughly described according to some embodiments of the present disclosure. In the following, other possible aspects of the cooling device 1 will be further provided according to different application requirements.

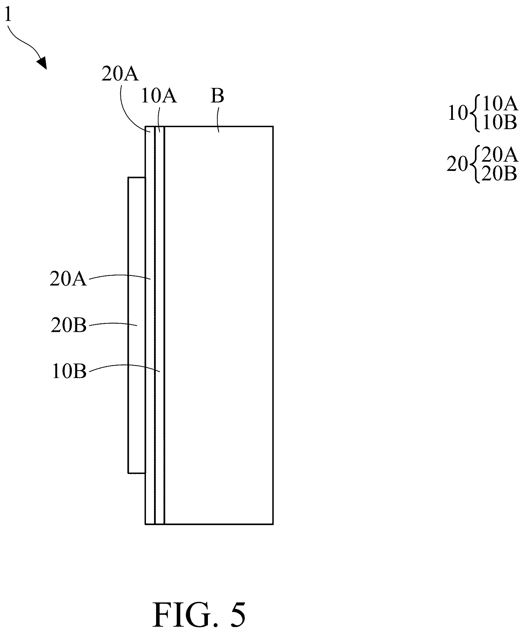

FIG. 5 is a schematic side view illustrating the cooling device and the battery cell according to some embodiments of the present disclosure. As shown in the figure, in some embodiments, the battery cell has a rectangular shape, and the first stack plate 10 is in direct contact with the battery cell B. Therefore, to maintain the maximum contact area between the first stack plate 10 and the battery cell B, the first bonding portion 10A and the first accommodating portion 10B of the first stack plate 10 may be coplanar, and the second accommodating portion 20B of the second stack plate 20 may protrude away from the first stack plate 10 relative to the second bonding portion 20A. For example, during the pressing process, a mold with a specific shape may be configured to cause the second accommodating portion 20B to protrude away from the first stack plate 10 relative to the second bonding portion 20A. As a result, the accommodating space AS for containing the cooling fluid 30 protrudes in a direction away from the battery cell B, without reducing the contact area between the first stack plate 10 and the battery cell B.

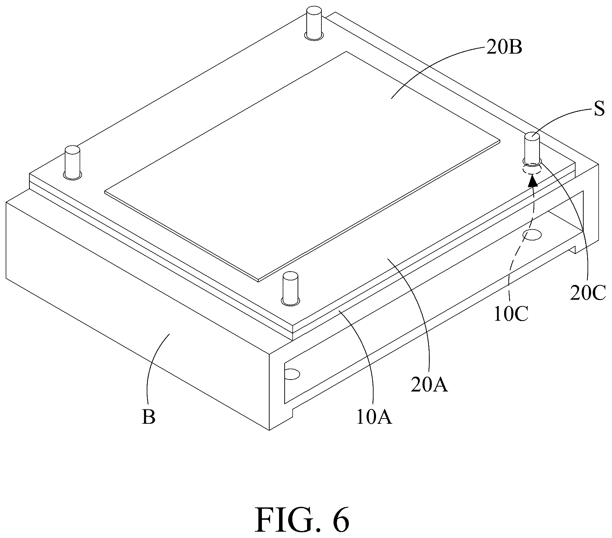

FIG. 6 is a perspective schematic diagram illustrating the cooling device and the battery cell according to some embodiments of the present disclosure. As shown in the figure, in some embodiments, the first stack plate 10 of the cooling device 1 has a connecting portion 10C, and the second stack plate 20 has a connecting portion 20C. In some embodiments, the connecting portion 10C and the connecting portion 20C may be corresponding through-holes (e.g., holes that penetrate both plates) for locking, and may be configured to be detachably connected to the battery cell B. For example, the first stack plate 10 and the second stack plate 20 may be detachably fixed to the battery cell B by screws S. In other embodiments, the connecting portion 10C and the connecting portion 20C may be corresponding interlocking protrusions (not shown) and interlocking recesses (not shown), and the battery cell B may further include an interlocking recess (not shown) corresponding to the connecting portion 10C. However, the present disclosure is not limited thereto. A person having ordinary skill in the art will appreciate that other connecting methods such as bonding, magnetic attraction, clamping, or a combination thereof may also be used to detachably or fixedly mount the first stack plate 10 and the second stack plate 20 onto the battery cell B.

In some embodiments, the connecting portion 10C is located at four corners of the first bonding portion 10A, and the connecting portion 20C is located at four corners of the second bonding portion 20A, but the present disclosure is not limited thereto. In other embodiments, the connecting portion 10C may be located at any position on the first bonding portion 10A, and the connecting portion 20C may be located at any position on the second bonding portion 20A. Similarly, the number and/or types of the connecting portions 10C and 20C may also be determined according to specific requirements.

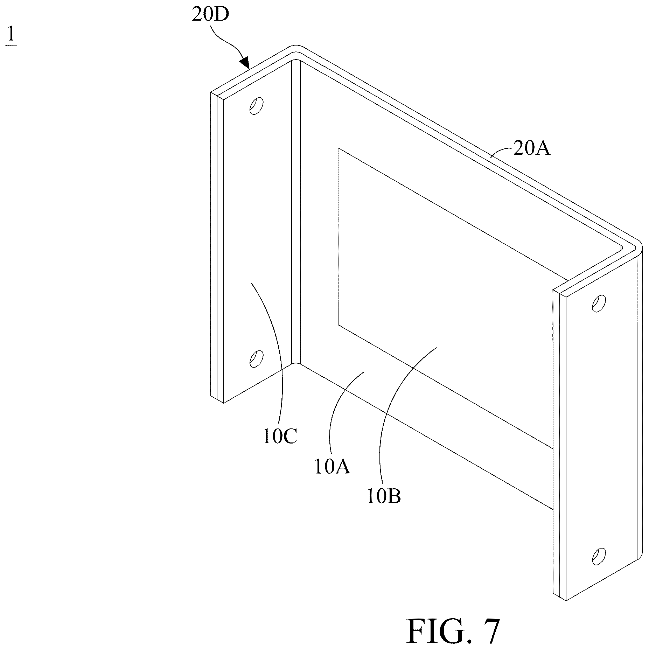

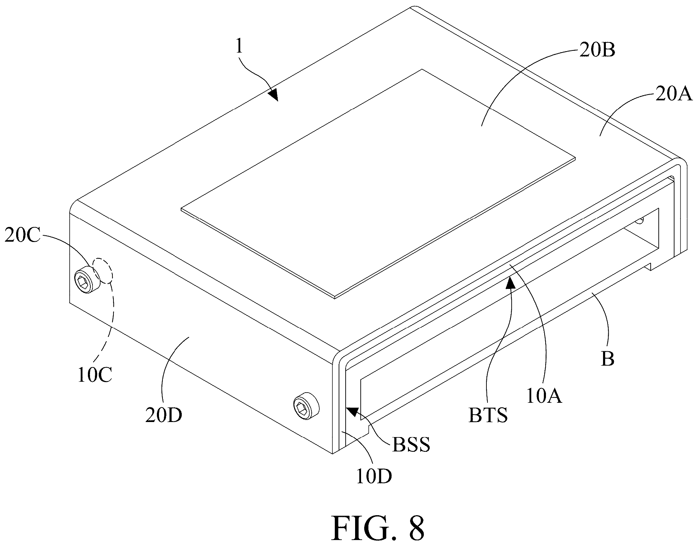

FIGS. 7 and 8 are respectively a perspective schematic diagram illustrating the cooling device and a perspective schematic diagram of the cooling device and the battery cell according to some embodiments of the present disclosure. As shown in the figures, in some embodiments, the first stack plate 10 of the cooling device 1 further includes a clamping portion 10D, and the second stack plate 20 further includes a clamping portion 20D. The clamping portion 10D extends from one side of the first bonding portion 10A and is bent, and the clamping portion 20D extends from one side of the second bonding portion 20A and is bent. The bending angles of the clamping portion 10D and the clamping portion 20D correspond to the side surface BSS of the battery cell B. For example, as shown in FIG. 7, the clamping portion 10D and the clamping portion 20D may extend from a top surface BTS of the battery cell B to a side surface BSS of the battery cell B to clamp the side surface BSS of the battery cell B. In this manner, the cooling device 1 may be more securely fixed to the battery cell.

In some embodiments, the connecting portion 10C may be disposed on the clamping portion 10D, and the connecting portion 20C may be disposed on the clamping portion 20D. In this manner, the first stack plate 10 and the second stack plate 20 may be connected to the side surface BSS of the battery cell B by the various methods described above. However, the present disclosure is not limited thereto.

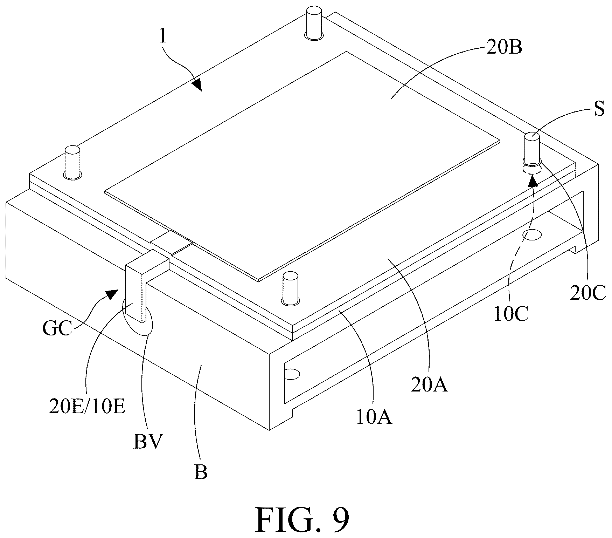

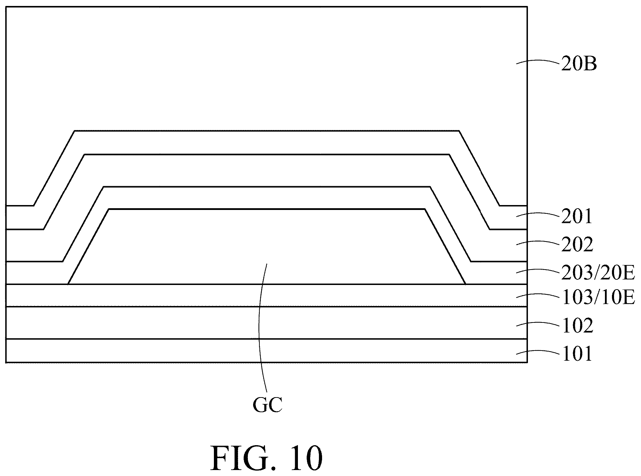

FIGS. 9 and 10 are respectively a perspective schematic diagram illustrating the cooling device and the battery cell and a cross-sectional schematic diagram of the flow-guiding structure according to some embodiments of the present disclosure. As shown in the figures, the first stack plate 10 further includes a first flow-guiding portion 10E, and the second stack plate 20 further includes a second flow-guiding portion 20E. The first flow-guiding portion 10E and the second flow-guiding portion 20E collectively define a flow-guiding channel GC. One end of the flow-guiding channel GC is in fluid communication with the sealed opening OP, and the other end is disposed at the valve port BV of the battery cell B. In this manner, when the cooling fluid 30 flows out from the sealed opening OP, it may be directed toward the valve port BV of the battery cell B through the flow-guiding channel GC, thereby preventing flame from escaping from the valve port BV. However, the present disclosure is not limited thereto. In other embodiments, the other end of the flow-guiding channel GC may be disposed at any location on the battery cell B, for example, a location where high temperature or flame is likely to be generated.

As shown in FIG. 10, in some embodiments, the first flow-guiding portion 10E and the second flow-guiding portion 20E may be formed by outwardly extending a sealing layer of the first stack plate 10 and a sealing layer of the second stack plate 20, respectively. For example, the first flow-guiding portion 10E and the second flow-guiding portion 20E may be the sealing layer 103 of the first stack plate 10 and the sealing layer 203 of the second stack plate 20, respectively, which extend toward the valve port BV. In this manner, additional sealing layers may be omitted. However, the present disclosure is not limited thereto. In some embodiments, the first flow-guiding portion 10E and the second flow-guiding portion 20E may instead be separately provided sealing layers to meet different application requirements. For example, a material with higher heat resistance may be selected to prevent the flow-guiding channel GC from prematurely melting and losing its function at a lower temperature than the runaway temperature of the battery cell B. Alternatively, a material with greater flexibility may be selected so that the flow-guiding channel GC can more closely conform to the battery cell B without warping.

In some embodiments, the fusible material 40 may be filled into the flow-guiding channel GC to seal the cooling fluid 30 within the accommodating space AS under normal operating conditions. However, the present disclosure is not limited thereto. In some embodiments, the ends of the first flow-guiding portion 10E and the second flow-guiding portion 20E, away from the accommodating space AS, may be completely joined to form a sealed port. Furthermore, when the temperature of the battery cell B exceeds the melting point of the first flow-guiding portion 10E and the second flow-guiding portion 20E, the sealed port may melt to form a gap. In this manner, the cooling fluid 30 may also flow out through the port. In such cases, materials with relatively low melting points, such as low-density polyethylene (LDPE) or polypropylene (PP), may be selected.

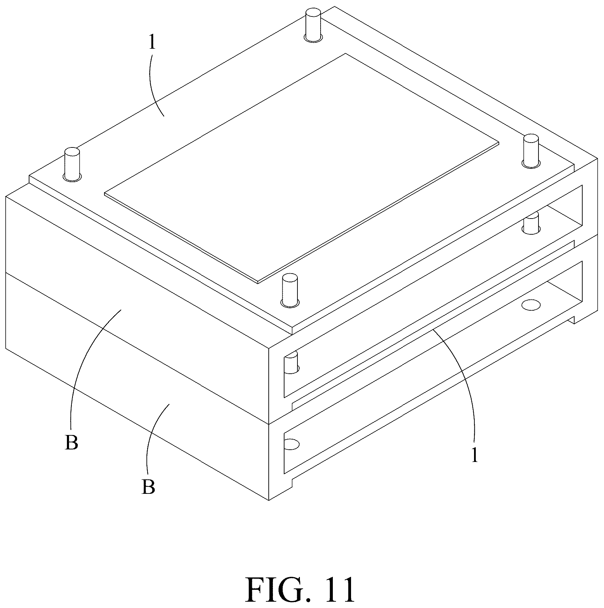

FIG. 11 is a perspective schematic diagram illustrating the plurality of cooling devices and the plurality of battery cells according to some embodiments of the present disclosure. As shown in the figure, in some embodiments, when a battery module includes a plurality of battery cells B stacked in sequence, a cooling device 1 may be disposed on each battery cell B to effectively protect the battery module. In other embodiments, a cooling device 1 disposed between two adjacent battery cells B may be in contact with both battery cells B simultaneously, thereby corresponding to and protecting multiple battery cells B at the same time.

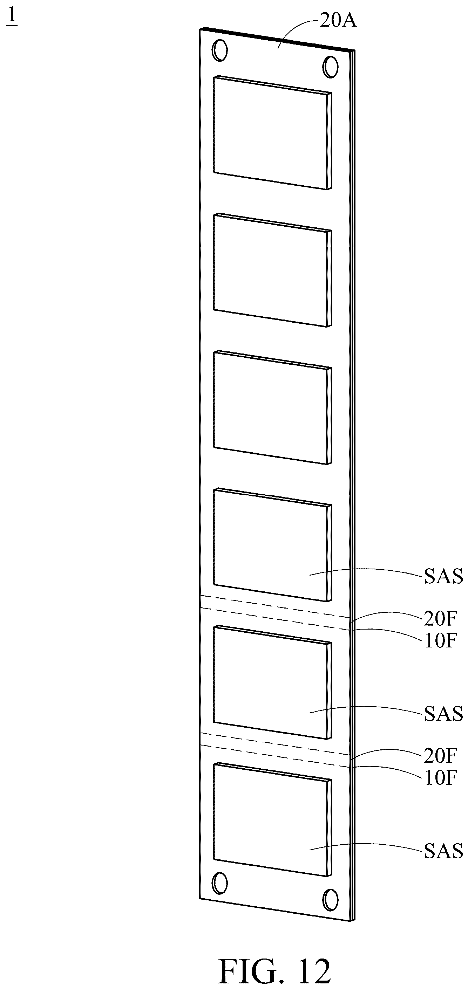

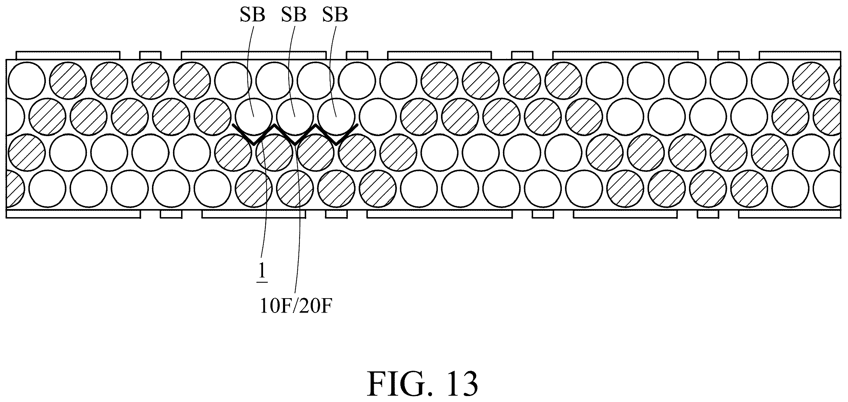

FIGS. 12 and 13 are respectively a perspective schematic diagram illustrating the cooling device and a schematic top view illustrating the cooling device and the battery cell according to some embodiments of the present disclosure. As shown in the figures, in some embodiments, the first stack plate 10 and the second stack plate 20 of the cooling device 1 respectively have a plurality of bending portion 10F and a plurality of bending portion 20F, and the bending portion 10F and the bending portion 20F divide the accommodating space AS into a plurality of separate sub-accommodating spaces SAS. Specifically, the bending portion 10F and the bending portion 20F may be located between adjacent sub-accommodating spaces SAS and may be bent along an axial direction, such that the adjacent sub-accommodating spaces SAS are positioned close to each other. For example, as shown in FIG. 13, in some embodiments, the battery cell B includes a plurality of columnar sub-cells SB, and the first stack plate 10 and the second stack plate 20 are bent about the bending portion 10F and the bending portion 20F (as an axis) and inserted between the columnar sub-cells SB. In this manner, the contact area between the cooling device 1 and the columnar sub-cells SB may be increased.

In summary, the present disclosure provides a cooling device that can effectively transfer heat from the battery cell to the outside under normal operating conditions. Furthermore, when the temperature of one or more battery cells rises to a critical level, the cooling device of the present disclosure can rapidly reduce the temperature of the battery cell by allowing the cooling fluid to overflow from the cooling bag, thereby effectively protecting the entire battery module.

The foregoing outlines features of several embodiments of the present disclosure, so that a person of ordinary skill in the art may better understand the aspects of the present disclosure. A person of ordinary skill in the art should appreciate that, the present disclosure may be readily used as a basis for designing or modifying other processes and structures for carrying out the same purposes and/or achieving the same advantages of the embodiments introduced herein. A person of ordinary skill in the art should also realize that such equivalent constructions do not depart from the spirit and scope of the present disclosure, and that they may make various changes, substitutions, and alterations herein without departing from the spirit and scope of the present disclosure.

## Claims

1. A cooling device for cooling a battery cell, comprising:
a first stack plate configured to be attached to the battery cell, the first stack plate including a first bonding portion and a first accommodating portion, and the first bonding portion surrounds the first accommodating portion;
a second stack plate disposed on the first stack plate, wherein the second stack plate including a second bonding portion and a second accommodating portion, and the second bonding portion surrounds the second accommodating portion, wherein the second bonding portion and the first bonding portion are joined to form a sealed opening, and the first accommodating portion and the second accommodating portion cooperate to define an accommodating space in fluid communication with the sealed opening;
a cooling fluid contained within the accommodating space; and
a fusible material disposed within the sealed opening.

2. The cooling device as claimed in claim 1, wherein the fusible material melts at a predetermined melting temperature to release the cooling fluid from the accommodating space through the sealed opening, in particular wherein the predetermined melting temperature is greater than 70 °C.

3. The cooling device as claimed in claim 1, wherein the first stack plate is in direct contact with the battery cell, and the second accommodating portion of the second stack plate protrudes away from the first stack plate.

4. The cooling device as claimed in claim 3, wherein the first bonding portion and the first accommodating portion of the first stack plate are coplanar.

5. The cooling device as claimed in claim 1, wherein the first stack plate further comprises a first flow-guiding portion, and the second stack plate further comprises a second flow-guiding portion, the first flow-guiding portion and the second flow-guiding portion collectively defining a flow-guiding channel extending from the sealed opening to a valve port of the battery cell.

6. The cooling device as claimed in claim 5, wherein the fusible material is disposed within the flow-guiding channel to seal the channel under normal operating conditions.

7. The cooling device as claimed in claim 6, wherein the first flow-guiding portion and the second flow-guiding portion are respectively formed by outwardly extending a sealing layer of the first stack plate and a sealing layer of the second stack plate, and the fusible material is the same as a material of the sealing layer of the first stack plate and the second stack plate.

8. The cooling device as claimed in claim 1, wherein the first stack plate and the second stack plate respectively have a plurality of bending portions, and the bending portions divide the accommodating space into a plurality of sub-accommodating spaces that are separated from each other.

9. The cooling device as claimed in claim 8, wherein the battery cell comprises a plurality of columnar sub-cells, and the first stack plate and the second stack plate are bent about the bending portions and interposed between the plurality of columnar sub-cells.

10. The cooling device as claimed in claim 1, wherein the first stack plate and the second stack plate respectively have a clamping portion, and the clamping portions extend from a top surface of the battery cell to a side surface of the battery cell.

11. The cooling device as claimed in claim 1, wherein the first bonding portion and the second bonding portion respectively have a connecting portion, and each the connecting portion is fixed to the battery cell by locking, adhesion, or snap-fitting.

12. The cooling device as claimed in claim 12, wherein the connecting portions are respectively located at corners of the first bonding portion and the second bonding portion.

13. The cooling device as claimed in claim 1, wherein the first stack plate and the second stack plate respectively comprise a protective layer, a barrier layer, and a sealing layer, and the barrier layer is disposed between the protective layer and the sealing layer, in particular wherein the protective layer of the first stack plate or the second stack plate comprises polyethylene terephthalate (PET), polyethylene (PE), nylon, or a combination thereof.

14. The cooling device as claimed in claim 13, wherein the barrier layer of the first stack plate or the second stack plate comprises aluminum foil, copper foil, silver foil, or a combination thereof, and/or wherein the sealing layer of the first stack plate or the second stack plate comprises polyethylene (PE), polypropylene (PP), or a combination thereof.

15. The cooling device as claimed in claim 1, wherein the cooling fluid comprises water-based coolants, fire-resistant coolants, oil-based coolants, organic coolants, Fluorinert, a combination thereof, and/or wherein the fusible material comprises low-density polyethylene (LDPE), polypropylene (PP), a combination thereof.
